# EUROPÄISCHE PATENTSCHRIFT

(11) **EP 0 868 726 B1**
(45) Veröffentlichungstag und Bekanntmachung des Hinweises auf die Patenterteilung: **10.05.2000**
(21) Anmeldenummer: 96946322.3
(22) Anmeldetag: 06.12.1996
(51) Int. Cl.: G21C 1/07

(54) **KUGELHAUFENREAKTOR**
PEBBLE BED REACTOR
REACTEUR A LIT DE BOULES

(30) Priorität: 20.12.1995 DE 19547652
(43) Veröffentlichungstag der Anmeldung: 07.10.1998
(73) Patentinhaber: FORSCHUNGSZENTRUM JÜLICH GMBH, 52425 Jülich (DE)
(72) Erfinder: GERWIN, Helmut, D-52428 Jülich (DE); SCHERER, Winfried, D-52428 Jülich (DE)
(86) Internationale Anmeldenummer: DE9602365
(87) Internationale Veröffentlichungsnummer: WO9722973

(56) Entgegenhaltungen:
- EP-A- 0 043 553
- EP-A- 0 081 778
- BE-A- 643 463
- DE-A- 1 464 740
- DE-A- 1 789 072
- US-A- 5 309 492

## Beschreibung

Die Erfindung bezieht sich auf einen Kugelhaufenreaktor mit einer von Brennelementkugeln gefüllten und von Reflektormaterial begrenzten Corekaverne, die von den Brennelementkugeln unter Schwerkraftwirkung durchsetzt und vom Kühlgas im Abwärts- oder Aufwärtsstrom durchströmt ist.

Kugelhaufenreaktoren sind bekannt. So ist beispielsweise in DE 31 49 794 C1 ein Kugelhaufenreaktor mit Graphitkern beschrieben. Bei Kugelhaufenreaktoren durchwandert eine Schüttung von Brennelementkugeln, der Kugelhaufen, unter Schwerkraftwirkung eine von Reflektormaterial begrenzte Corekaverne. Die Regelung des Kernreaktors erfolgt durch Neutronenabsorber, beispielsweise Regelstäbe, die entweder in Bohrungen im Reflektormaterial geführt werden oder auch direkt zur Reaktorregelung in die Schüttung der Brennelementkugeln eindringen.

Zum Austausch abgebrannter Brennelementkugeln, die aus der Corekaverne abgezogen werden, wird die Schüttung aufgefüllt. Für das Abziehen der Brennelementkugeln sind üblicherweise Kugelabzugsrohre im Boden der Corekaverne vorgesehen. Den Kugelabzugsrohren werden die Brennelemente in trichterartigen Vertiefungen im Bodenreflektor zugeführt. Größere Corekavernen oder Corekavernen mit einer Mittelsäule aus Graphit im Kugelhaufen sind mit mehreren Kugelabzugsrohren ausgerüstet.

Die Schüttung der Brennelemente wird üblicherweise in vertikaler Richtung von einem Kühlgas, insbesondere Helium, durchströmt. Die Strömungsrichtung des Kühlgases kann mit der Durchsatzrichtung der Brennelementkugeln in Schwerkraftrichtung gleichgerichtet sein (Abwärtsstrom), das Kühlgas kann jedoch die Corekaverne auch entgegengesetzt zur Durchsatzrichtung der Brennelementkugeln, also aufwärts (Aufwärtsstrom) durchströmen. Zum Zu- bzw. Abführen des Kühlgases weist die Corekaverne im Decken- und Bodenreflektor Zufuhr- bzw. Abströmöffnungen für das Kühlgas auf, die üblicherweise jeweils in Gassammelkammern münden, die zur Vergleichmäßigung des Gasstroms, insbesondere zum Temperaturausgleich im Kühlgas dienen.

Beim Durchsatz der Brennelementkugeln in Schwerkraftrichtung verschleißen die Kugeloberflächen. Es können auch Kugelbruchstücke entstehen, die sich am Boden der Corekaverne sammeln. Kugelbruchstücke treten insbesondere dann auf, wenn in die Schüttung Regelstäbe eingeführt und in der Schüttung bewegt werden. Solche Kugelbruchstücke werden im wesentlichen über die Kugelabzugsrohre aus der Corekaverne entfernt, sie können sich aber auch in den Gasdurchführungen im Bodenreflektor festsetzen und Verstopfungen verursachen. Die Kühlgasströmung kann in solchen Fällen erheblich beeinträchtigt sein.

Aus EP-A 0 081 778 ist ein Kugelhaufenreaktor mit einem axialen Kühlgasabzug über ein Kugelabzugsrohr, bzw. vertikale Leitungen oder Kanäle zum Abführen von Kühlgas aus einem ringförmigen Bereich des Reaktors bekannt.

In DE-A 1 464 740 werden seitliche Abzüge des Kühlgases über die gesamte Höhe der Begrenzungswand in einen den Reaktor umgebenden Sammelraum beschrieben.

Ein Kugelhaufenreaktor, bei dem eine horizontal verlaufende Kühlgasleitung in eine Ringkammer führt, die von der äußeren konzentrischen abschirmenden Wand und der inneren perforierten Wand des Reaktors gebildet wird, ist aus US-A 5 309 492 bekannt.

Ferner beschreibt EP-A 0 043 553 einen Kugelhaufenreaktor, bei dem eine horizontale Kühlgasableitung in mittlerer Höhe zwischen Kühlgaseintritt und -austritt angebracht ist.

Aufgabe der Erfindung ist es, bei Kugelhaufenreaktoren eine auch über lange Betriebszeiten hinweg störungsfreie Kühlgasführung durch die Brennelementschüttung in der Corekaverne hindurch zu ermöglichen.

Diese Aufgabe wird bei einem Kugelhaufenreaktor der eingangs genannten Art durch die in Patentanspruch 1 angegebenen Merkmale gelöst. Danach sind alle Anschlüsse für die Kühlgasleitungen zum Zu- bzw. Abführen von Kühlgas in der Corekaverne seitlich oberhalb vom Kavernenboden angebracht. Das Kühlgas strömt somit in die Corekaverne seitlich oberhalb des Kavernenbodens bei Aufwärtsstrom zu bzw. bei Abwärtsstrom ab. In derartige seitliche Öffnungen kann stückiger Abrieb der Brennelementkugeln nicht eindringen.

Ist zum Abzug der Brennelementkugeln eine mulden- oder trichterförmige Ausbildung des Kavernenbodens vorgesehen, oder weist der Kavernenboden mehrere benachbart angeordnete mulden- oder trichterförmige Ausbildungen auf, ist in vorteilhafter Ausgestaltung der Erfindung vorgesehen, daß die Kuhlgasleitungen in zumindest zwei übereinanderliegenden Ebenen in den Mulden- oder Trichterwänden münden, Patentanspruch 2. Bevorzugt verlaufen die Kühlgasleitungen horizontal in der Reflektorwand, Patentanspruch 3.

Bei Anordnung einer Mittelsäule in der Corekaverne werden die Kühlgasleitungen unter Ausnutzung des in der Mittelsäule vorhandenen umbauten Raums mit Vorteil innerhalb der Mittelsäule verlegt und münden im Wandbereich der Mittelsäule, Patentanspruch 4. Um bei einer solchen Führung des Kühlgases alle Brennelemente bis zu ihrem Eintritt in die Kugelabzugsrohre vom Kühlgas umströmen zu lassen, sind die Kugelabzüge nach Patentanspruch 5 zweckmäßig in einem der Mittelsäule nahen Bodenbereich im Kavernenboden angeordnet.

Die Erfindung mit ihren Ausbildungen wird nachfolgend anhand von Ausführungsbeispielen näher erläutert. Die Zeichnung zeigt im einzelnen:
- Figur 1: Kugelhaufenreaktor mit trichterförmig ausgebildetem Kavernenboden und in mehreren Ebenen mündenden Kühlgasleitungen, im Halbschnitt;
- Figur 2: Variante eines Kugelhaufenreaktors nach Figur 1 im Halbschnitt;
- Figur 3: Kugelhaufenreaktor mit Mittelsäule im Halbschnitt.

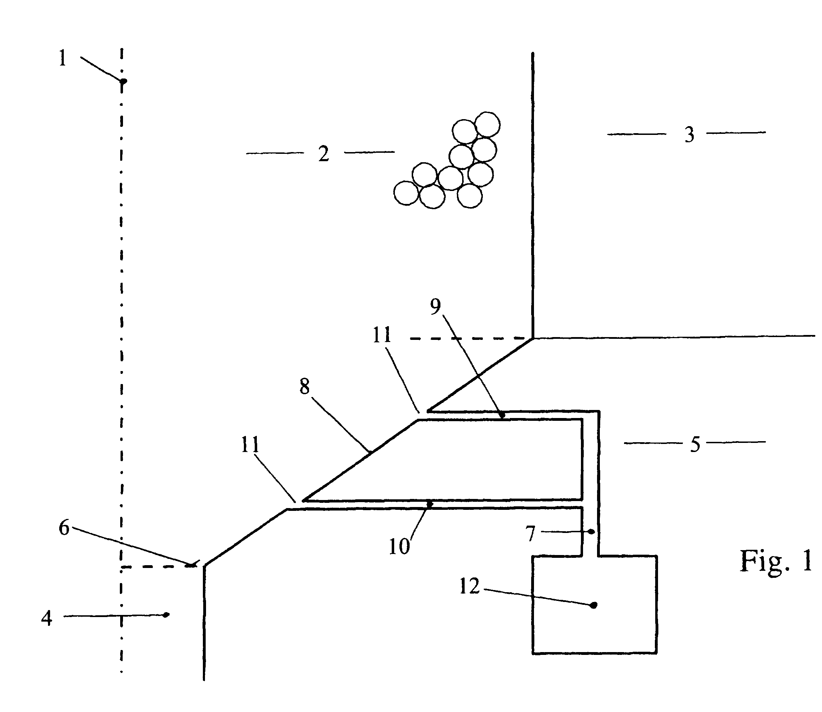

In Figur 1 ist schematisch der untere Bereich einer zylindrischen Corekaverne im Halbschnitt mit Zylinderachse 1, mit einer Brennelementkugelschüttung 2, dem Kugelhaufen, der in Figur 1 und den nachfolgenden Figuren der Zeichnung nur angedeutet ist, mit die Schüttung 2 umgebendem Reflektor 3 und mit einem Kugelabzug 4 im Kavernenboden 5 dargestellt. Der Kavernenboden 5 weist im Ausführungsbeispiel einen trichterförmigen Innenraum auf, wobei die Trichterspitze bis zur Sohle 6 des Kavernenbodens 5 führt und am Kugelabzug 4 mündet. Innerhalb der Wände des Kavernenbodens 5 verlaufen Kühlgasführungen 7, die in mehreren Ebenen - im Ausführungsbeispiel in zwei in vertikaler Richtung übereinander angeordneten Ebenen - im trichterförmigen Innenraum des Kavernenbodens 5 auf dessen Innenwand 8 münden. In Figur 1 sind zwei Zweigleitungen 9, 10 der Kühlgasführung 7 schematisch dargestellt, durch die das Kühlgas in die Brennelementkugelschüttung 2 im Trichter des Kavernenbodens durch Öffnungen 11 hindurchgeführt wird. Das Kühlgas durchströmt im Ausführungsbeispiel die Corekaverne in Aufwärtsrichtung, also in entgegengesetzter Richtung zum Schwerkraftdurchsatz der Brennelementkugeln.

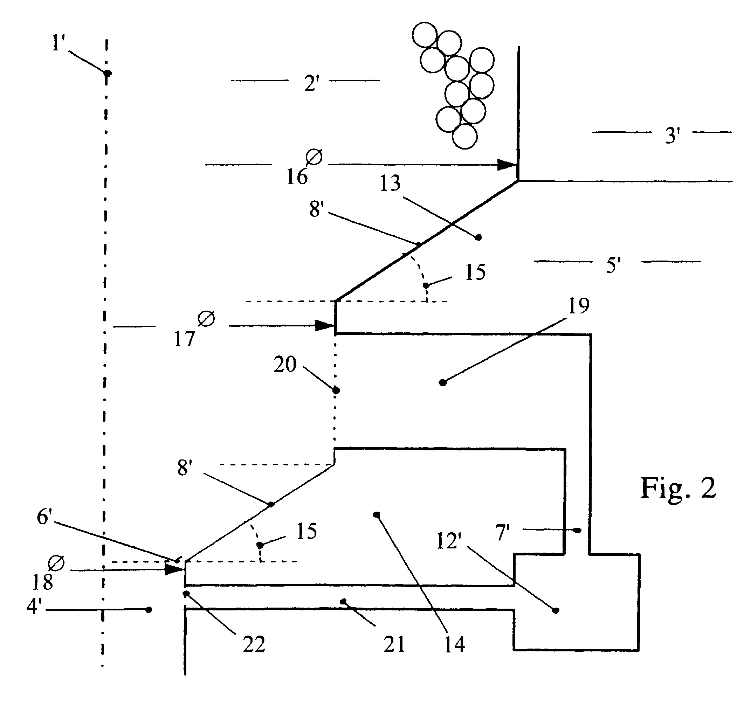

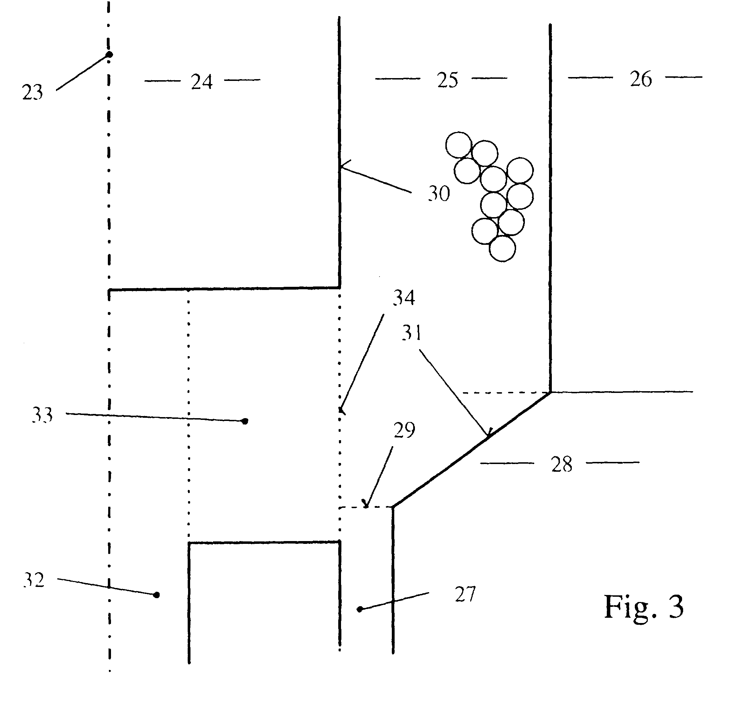

In die Kühlgasführung 7 strömt das Kühlgas aus einer vorgeschalteten Gassammelkammer 12 ein. An der Gassammelkammer 12, die ringförmig um die Zylinderachse 1 verläuft, sind mehrere Kühlgasführungen 7 mit im trichterförmigen Innenraum des Kavernenbodens 5 mündenden Zweigleitungen 9, 10 angeschlossen, im Ausführungsbeispiel sind eine Vielzahl von Kühlgasführungen vorgesehen. In Figur 1 und in nachfolgenden Figuren 2 und 3 ist jeweils nur eine dieser Kühlgasführungen wiedergegeben. Die Gaszufuhr in die Gassammelkammer 12 ist in den Figuren der Zeichnung nicht dargestellt.

Eine Variante der Corekaverne nach Figur 1 ist in Figur 2 wiedergegeben. Diejenigen Ausbildungsmerkmale der Corekaverne nach Figur 2, die Merkmalen der Figur 1 entsprechen, sind in Figur 2 mit gleichem Bezugszeichen wie in Figur 1, jedoch zusätzlich mit einem Beistrich markiert, beispielsweise ist die Zylinderachse in Figur 1 mit "1", in Figur 2 mit "1'" angegeben.

Der trichterförmige Innenraum des Kavernenbodens 5' ist beim Ausführungsbeispiel nach Figur 2 in zwei übereinander angeordnete Kegelstumpfteile 13, 14 aufgeteilt, von denen der obere Kegelstumpfteil 13 einen mit dem unteren Kegelstumpfteil 14 übereinstimmenden Kegelwinkel 15 und einen Kegelbasisdurchmesser 16 an seinem oberen Kegelende aufweist, der - zum Anschluß an den Innenraum der Corekaverne - mit dem äußeren Durchmesser des die Brennelementkugelschüttung 2 aufnehmenden Innenraums der Corekaverne übereinstimmt. Der untere Kegelstumpfteil 14 weist an seinem oberen Kegelende einen Kegelbasisdurchmesser 17 auf, der dem Kegelstumpfdurchmesser des Kegelstumpfteils 13 an dessen unterer Kegelstumpfseite entspricht, die Kegelstumpfteile 13, 14 sind somit fluchtend übereinander angeordnet. Der untere Kegelstumpfteil 14 führt zum Kugelabzug 4', sein Kegelstumpfdurchmesser am unteren Kegelstumpfende entspricht somit dem Durchmesser 18 des Kugelabzugs 4'.

Zwischen den Kegelstumpfteilen 13, 14 ist eine obere Zweigleitung 19, die an der Kühlgasführung 7' angeschlossen ist, mit senkrechten Öffnungen 20 zum Ausströmen des Kühlgases in den trichterförmigen Innenraum des Kavernenbodens 5' angeordnet. Eine untere Zweigleitung 21 zur Kühlgasführung verläuft unterhalb des unteren Kegelstumpfteils 14 und mündet mit senkrechten Öffnungen 22 an der Trichterspitze des Kavernenbodens 5' unmittelbar in den Kugelabzug 4'. Das Kühlgas strömt - wie schon im Ausführungsbeispiel nach Figur 1 - aus einer Gassammelkammer 12' in die Kühlgasführung 7' und die untere Zweigleitung 21 ein. An der Gassammelkammer 12' sind mehrere Kühlgasführungen 7' angeschlossen, in Figur 2 ist wie in Figur 1 nur eine dieser Kühlgasführungen dargestellt.

Der trichterförmige Innenraum des Kavernenbodens 5' nach Figur 2 besteht somit aus einem horizontal in zwei Kegelstumpfteile 13, 14 getrennten Trichter, wobei die Kegelstumpfteile übereinander liegen und zwischen ihnen ein zylindrischer Teil mit den Öffnungen 20 für die obere Zweigleitung 19 angeordnet ist, sowie einer zylindrisch auslaufenden Trichterspitze, die in den Kegelabzug 4' mündet und im Mündungsbereich die Öffnungen 22 der unteren Zweigleitungen 21 aufweist. Eine solche Ausbildung eignet sich insbesondere für eine Corekaverne mit hinreichend kleinem Druckabfall beim Durchströmen des Kühlgases durch den Kugelhaufen. Durch die horizontal verlaufenden Kühlgasführungen mit in den zylindrischen Teilen senkrecht stehenden, also parallel zur Durchlaufrichtung der Brennelementkugeln ausgerichteten Öffnungen 20, 22 wird ein Verstopfen der Kühlgaszuführungen bzw. ihrer Zweigleitungen vermieden.

Für Kugelhaufenreaktoren höherer Leistung in der Kugelschüttung ist es vorgesehen, eine Mittelsäule in der Corekaverne anzuordnen und die Brennelementkugeln ringförmig um die Mittelsäule herum aufzuschütten. Für einen solchen Kugelhaufenreaktor zeigt Figur 3 eine der Erfindung entsprechende Kühlgaszufuhr seitlich oberhalb der Sohle des Kavernenbodens.

In Figur 3 ist schematisch, wie in Figuren 1 und 2, wieder der untere Bereich einer zylindrischen Corekaverne mit Zylinderachse 23 im Halbschnitt, mit einer Mittelsäule 24, mit im Querschnitt ringförmig um die Mittelsäule 24 aufgeschütteter Brennelementkugelschüttung 25, mit die Schüttung 25 umgebendem Reflektor 26 und Kugelabzügen 27 wiedergegeben, von denen in Figur 3 nur einer der Kugelabzüge dargestellt ist. Die Kugelabzüge gehen im Kavernenboden 28 von dessen Sohle 29 aus, sie sind ringförmig um die Zylinderachse 23 unterhalb der Brennelementkugelschüttung 25 angeordnet und befinden sich in einem der äußeren Wand 30 der Mittelsäule 24 nahegelegenen Bodenbereich an der Sohle 29 des Kavernenbodens 28.

Im Ausführungsbeispiel weist der Kavernenboden 28 eine trichterförmige Innenwand 31 auf, über die die Brennelementkugeln zu den Kugelabzügen 27 im Kavernenboden 28 geführt werden.

Eine Kühlgaszufuhr 32 befindet sich zentral in der Mittelsäule 24. Die Kühlgaszufuhr 32 weist Zweigleitungen 33 auf, die horizontal durch die Wand der Mittelsäule 24 geführt sind und mit senkrecht verlaufenden Mündungsöffnungen 34, die als Löcher oder Schlitze ausgeführt und in Figur 3 nicht dargestellt sind, in die Brennelementkugelschüttung 25 münden. Das Kühlgas strömt in die Kugelschüttung in einem Bereich ein, in dem sich die Brennelementkugeln kurz vor ihrem Austritt aus der Corekaverne vor den Kugelabzügen 27 befinden.

Eine solche Kühlgasführung mit Auf- oder Abwärtsströmung des Kühlgases im Kugelhaufen weist folgende Vorteile auf:
- Dem Kühlgas, das im Kugelhaufen entlang der Außenwand der Mittelsäule strömt, in einer Zone also, in der die größte Leistungsdichte gegeben ist, wird ein besonders kurzer Weg durch die Brennelementkugelschüttung geboten.
- Dem Kühlgas, das an der Innenwand des Außenreflektors strömt, wird der längste Weg durch die Brennelementkugelschüttung aufgezwungen, so daß es sich auch beim Durchströmen von Zonen im Kugelhaufen mit niedriger Leistungsdichte hinreichend aufheizen kann.
- Der innere Bereich der Mittelsäule kann vorteilhaft für die Unterbringung der Gassammelkammern, der Heißgas- bzw. Kaltgas-Kammer, genutzt werden, wobei bei Aufwärtsstrom des Kühlgases im unteren Bereich der Mittelsäule die Kaltgaskammer, im oberen Bereich die Heißgaskammer angeordnet ist. Bei Abwärtsstrom liegen die Kammern in der Mittelsäule umgekehrt.
- Der Kavernenboden als Bodenreflektor enthält außer den Kugelabzügen keinerlei Öffnungen und kann mit glatter Oberfläche und als massives Bauelement mit besserer Reflektor- und Abschirmwirkung bei niedriger Bauweise (auch wegen der hier nicht mehr notwendigen Gassammelkammer) gestaltet werden.
- Bei Abwärtsstrom kann das Heißgas aus der unteren Gassammelkammer in der Mittelsäule in einfacher Weise zu den Dampferzeugern bzw. Wärmetauschern geführt werden. Darüber hinaus ist eine gute Durchmischung des aufgeheizten Kühlgases erreichbar.

Ein Kugelhaufen-Hochtemperaturreaktor mit Mittelsäule und einer Leistung von 400 MW thermisch, bei dem das Kühlgas im Aufwärtsstrom entsprechend dem Stand der Technik durch Öffnungen auf der Sohle des Kavernenbodens in die Brennelementkugelschüttung eingeführt wird, zeigt Unterschiede für die Austrittstemperatur des Kühlgases aus der Corekaverne von mehr als 150°C. Diese Temperaturdifferenzen reduzieren sich auf weniger als 10°C, wenn die Kugelabzüge an der Wand der Mittelsäule angeordnet sind und das Kühlgas über die Mittelsäule über Schlitze in den Kugelhaufen einströmt, die am unteren Ende der Mittelsäule angeordnet und 30 % der Länge der Mittelsäule betragen. Eine weitere Reduktion der Austrittstemperaturdifferenzen könnte mit einem über der Höhe der Mittelsäule variierten Lochanteile erreicht werden, wobei der größere Teil der Kühlgasmenge in den Kugelhaufen im Bereich oberhalb der Kugelabzüge eingeführt wird.

### Bezugszeichenliste

- Zylinderachse: 1, 1'
- Brennelementkugelschüttung: 2, 2'
- Reflektor: 3, 3'
- Kugelabzug: 4, 4'
- Kavernenboden: 5, 5'
- Sohle: 6, 6'
- Kühlgasführung: 7, 7'
- Innenwand: 8, 8'
- Zweigleitung: 9, 10
- Öffnungen: 11
- Gassammelkammer: 12, 12'
- Kegelstumpfteil: 13,14
- Kegelwinkel: 15
- Kegelbasisdurchmesser: 16, 17
- Durchmesser des Kugelabzugs: 18
- Zweigleitung: 19
- Öffnungen: 20
- Zweigleitung: 21
- Öffnungen: 22
- Zylinderachse: 23
- Mittelsäule: 24
- Brennelementkugelschüttung: 25
- Reflektor: 26
- Kugelabzug: 27
- Kavernenboden: 28
- Sohle: 29
- Wand der Mittelsäule: 30
- Innenwand: 31
- Kühlgaszufuhr: 32
- Zweigleitung: 33
- Mündungsöffnung: 34

## Patentansprüche

1. Kugelhaufenreaktor mit einer von Brennelementkugeln gefüllten und von Reflektormaterial begrenzten Corekaverne, die von den Brennelementkugeln unter Schwerkraftwirkung durchsetzt und von Kühlgas im Abwärts- oder Aufwärtsstrom durchströmt ist,
**dadurch gekennzeichnet,**
**daß** alle zum Abführen von abwärtsströmendem Kühlgas, bzw. Zuführen von aufwärtsströmendem Kühlgas vorgesehenen Kühlgasleitungen, die direkt in die Kugelschüttung der Corekaverne münden, seitlich in der Nähe der Kugelabzüge und horizontal angeordnet sind.

2. Kugelhaufenreaktor nach Anspruch 1,
**dadurch gekennzeichnet,**
daß die Kühlgasleitungen (7, 9, 10) bei zum Abzug der Brennelementkugeln mulden- oder trichterförmiger Ausbildung des Kavernenbodens (5) oder mehreren mulden- oder trichterförmigen Ausbildungen im Kavernenboden in zumindest zwei übereinanderliegenden Ebenen in Mulden- oder Trichterwänden münden.

3. Kugelhaufenreaktor nach Anspruch 1 oder 2,
**dadurch gekennzeichnet,**
daß die Kühlgasleitungen (9, 10; 19; 33) horizontal verlaufen.

4. Kugelhaufenreaktor nach Anspruch 1,
**dadurch gekennzeichnet,**
daß die Kühlgasleitungen (32, 33) bei Anordnung einer Mittelsäule (24) in der Corekaverne in der Mittelsäule (24) verlaufen und im Wandbereich (3) der Mittelsäule (24) in der Nähe der Kugelabzüge münden.

5. Kugelhaufenreaktor nach Anspruch 4,
**dadurch gekennzeichnet,**
daß für die Brennelementkugeln vorgesehene Kugelabzüge (27) im Kavernenboden (28) in einem der Mittelsäule (24) nahen Bodenbereich angeordnet sind.

## Claims

1. Pebble bed reactor comprising a core cavern, which is filled with fuel element balls and defined by reflector material and throughput by the fuel element balls under the force of gravity and flowed through by cooling gas in a downward or upward flow, **characterised in that** all cooling gas pipes, which are provided for a discharge downward flowing cooling gas or a delivery of upward flowing cooling gas and terminate directly in the ball bulk of the core cavern, are arranged laterally in the vicinity of the ball extractions and horizontally.

2. Ball bed reactor according to Claim 1, **characterised in that** the cooling gas pipes (7, 9, 10) terminate in mould or funnel walls and are, for the purpose of extraction of fuel element balls, of mouldlike or funnellike design of the cavern base (5) or a plurality of mouldlike or funnellike designs in the cavern base in at least two stacked planes.

3. Ball bed reactor according to Claim 1 or 2, **characterised in that** the cooling gas pipes (9, 10; 19; 33) extend horizontally.

4. Ball bed reactor according to Claim 1, **characterised in that** the cooling gas pipes (32, 33) extend, with configuration of a centre column (24) in the core cavern, in the centre column (24) and terminate in the wall area (3) of the centre column (24) in the vicinity of the ball extractions.

5. Ball bed reactor according to Claim 4, **characterised in that** ball extractors (27) provided for the fuel element balls are arranged in the cavern base (28) in a base area near the centre column (24).

## Revendications

1. Réacteur à lit de boules présentant un coeur caverneux rempli de boules de combustible et limité par un matériau réflecteur, lequel réacteur étant lesté par les boules de combustible et traversé par un gaz réfrigérant en courant descendant ou ascendant, caractérisé en ce que, pour évacuer tout le gaz réfrigérant en courant descendant, respectivement alimenter en gaz réfrigérant en courant ascendant, des conduits prévus à cet effet, qui débouchent directement dans le remblais de boules formé dans le coeur caverneux, sont disposés latéralement et horizontalement à proximité du déchargement des boules.

2. Réacteur à lit de boules selon la revendication 1, caractérisé en ce que les conduits de gaz réfrigérant (7, 9, 10) sont formés en auge près du déchargement des boules de combustible
- ou bien forment un ou plusieurs entonnoirs à partir du sol (5) du coeur caverneux
- ou bien formés en entonnoirs dans le sol du coeur caverneux et superposés en auge selon au moins deux niveaux
- ou bien débouchent en entonnoir dans les parois.

3. Réacteur à lit de boules selon l'une des revendications 1 ou 2, caractérisé en ce que les conduits de gaz réfrigérant (9, 10 ; 19 ; 23) sont disposés horizontalement.

4. Réacteur de lit de boules selon la revendication 1, caractérisé en ce que les conduits de gaz réfrigérant (32, 33) suivent un arrangement à colonne centrale (24) par agencement de cette colonne dans le coeur caverneux et débouchent dans la zone de la paroi (3) de la colonne centrale (24) à proximité du déchargement des boules.

5. Réacteur à lit de boules selon la revendication 4, caractérisé en ce que des déchargements (27) de boules de combustible sont prévus et réalisés dans le sol du coeur (28) dans l'une des colonnes centrales (24) à proximité de la région du sol.
